(19) **Europäisches Patentamt**

**European Patent Office**

**Office européen des brevets**

(11) Numéro de publication: **0 072 281**
**B1**

(12) # FASCICULE DE BREVET EUROPEEN

(45) Date de publication du fascicule du brevet:
**27.12.85**

(51) Int. Cl.⁴: **B 32 B 15/14,** G 12 B 17/06,
F 16 L 59/02

(21) Numéro de dépôt: **82401365.0**

(22) Date de dépôt: **22.07.82**

(54) **Ecran thermique composite et procédé de fabrication.**

(30) Priorité: **30.07.81 FR 8114868**

(43) Date de publication de la demande:
**16.02.83 Bulletin 83/7**

(45) Mention de la délivrance du brevet:
**27.12.85 Bulletin 85/52**

(84) Etats contractants désignés:
**BE DE GB NL**

(56) Documents cités:
**FR - A - 2 382 642**
**GB - A - 1 221 068**
**GB - A - 2 021 040**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Testard, Olivier, 56, rue Charles-de-Gaulle, F-91440 Bures Sur Yvette (FR)**

(74) Mandataire: **Mongrédien, André et al, c/o BREVATOME 25, rue de Ponthieu, F-75008 Paris (FR)**

BUNDESDRUCKEREI BERLIN

## Description

La présente invention concerne un écran thermique composite et un procédé de fabrication de cet écran thermique. Elle s'applique notamment à l'isolation thermique d'instruments cryogéniques embarqués sur les engins spatiaux.

On connaît des écrans thermiques formés par superposition d'une pluralité d'isolants thermiques composites comprenant chacun une couche réflectrice ou »réflecteur«, apte à réfléchir des radiations électromagnétiques, notamment les radiations infrarouges, et une couche d'espacement ou »espaceur«. Les espaceurs connus présentent une faible longueur de jonction entre deux couches réflectrices successives et ont un faible volume massique. Ils sont donc facilement compactables. Il en résulte un tassement important des couches d'espacement sous l'effet d'accélérations, de vibrations, ... Ce tassement provoque une augmentation du nombre des points de contact entre deux réflecteurs successifs, ce qui entraîne un accroîssement de la conductivité thermique entre réflecteurs réunis par de tels espaceurs; cette conductivité est proportionnelle au poids total de ces isolants thermiques élémentaires (en nombre élevé pour limiter la transmission de chaleur par rayonnement) donc à la densité surfacique unitaire des isolants thermiques élémentaires dont les écrans sont formés.

La présente invention a pour but de remédier à cet inconvéntient et elle vise un écran thermique composite et un procédé de fabrication de cet écran thermique.

L'invention a tout d'abord pour objet un écran thermique comprenant au moins un ensemble thermiquement isolant formé d'une couche réflectrice et d'une couche d'espacement, caractérisé en ce que ladite couche d'espacement est en tulle, c'est-à-dire en un tricot à maille lâche de masse volumique extrêmement faible.

Avec ce type d'espaceur, il n'existe que peu de contacts à l'unité de surface entre deux couches réflectrices successives, dans le cas d'un écran »multicouche«, c'est-à-dire comportant plusieurs desdits ensembles thermiquement isolants superposés, ou entre la couche réflectrice et un objet à isoler thermiquement, dans le cas d'un écran comportant une seule couche réflectrice et une seule couche d'espacement. De plus, le déploiement filamentaire entre deux contacts successifs est très important. Par ailleurs, l'emploi du tulle, du fait de la longueur importante des mailles de celui-ci, permet d'augmenter le volume massique d'une couche d'espacement en conservant la rigidité. La tendance au tassement sous accélération de cette couche est par conséquent faible.

L'écran thermique objet de l'invention a donc une conductivité thermique très inférieure à celle des écrans thermiques composites connus.

Selon une caractéristique préférée de l'écran thermique objet de l'invention, ledit tulle est réalisé à l'aide d'un fil monobrin, ce qui accroît la rigidité dudit tulle et donc sa résistance au tassement.

Selon une caractéristique particulière de l'écran thermique objet de l'invention, l'espace défini par la (ou chaque) couche d'espacement est sous vide.

Selon une autre caractéristique préférée, ladite couche réflectrice est faite à partir d'une matière de support prise dans le groupe comprenant les polyesters et les polyimides, matières légères et ayant une bonne tenue en température. De préférence, ladite couche d'espacement est alors faite de la même matière que la matière de support de ladite couche réflectrice, car elle est destinée à lui être soudée en cours de fabrication de l'écran thermique composite et doit présenter de préférence les mêmes caractéristiques de dilatation thermique. Toutefois, tout autre matériau choisi pour ses faibles conduction thermique et poids spécifique, pour sa bonne tenue mécanique à toutes températures, et pour sa grande rigidité spécifique peut être retenu.

Selon une autre caractéristique particulière de l'écran thermique objet de l'invention, ladite couche réflectrice comprend au moins une face métallisée. Elle est par exemple métallisée sur ses deux faces.

Selon une autre caractéristique particulière, ladite couche réflectrice comprend au moins une face formée d'un ensemble de surfaces élémentaires métallisées mais électriquement isolées les unes des autres, de façon à réduire les vibrations et les dissipations thermiques par courants de Foucault, se produisant dans une couche réflectirce métallisée lorsque celle-ci est soumise à un champ magnétique variable dans le temps. De préférence, l'ensemble desdites surfaces élémentaires est réalisé par électro-usinage.

Selon une autre caractéristique particulière, ledit écran thermique se présente sous la forme d'un ruban et s'applique alors notamment à l'isolation thermique d'un objet, ledit ruban étant bobiné autour dudit objet sur plusieurs épaisseurs. Bien entendu, ledit écran thermique peut être produit sous forme de ruban ou sous forme de pièces séparées comme on le verra plus loin. Par ailleurs, ledit écran thermique peut être »monocouche«, c'est-à-dire ne comporter qu'une couche réflectrice et une couche d'espacement, ou »multicouche«, selon le sens donné plus haut à ce terme.

Le tulle, du fait de sa très faible masse volumique, est extrêmement difficile à manipuler et à mettre en place sur un objet, lorsque ce tulle est à l'état libre.

La présente invention concerne par ailleurs un procédé de fabrication dudit écran thermique composite également objet de cette invention. Ce procédé est destiné à rendre solidaires l'une de l'autre ladite couche réflectrice et ladite couche d'espacement. On peut ainsi obtenir ledit ensemble thermiquement isolant, un écran »multicouche« pouvant alors être obtenu par superposition de plusieurs de ces ensembles thermiquement isolants.

Ce procédé est caractérisé en ce qu'il consiste à effectuer simultanément:

— un découpage de ladite couche réflectrice et de ladite couche d'espacement, de façon à former des bords pour lesdites couches, et
— un soudage de ces couches l'une à l'autre sur lesdits bords. Ce découpage et ce soudage sont effectués à chaud.

Selon une caractéristique particulière du procédé objet de l'invention, ledit découpage et ledit soudage sont effectués sur une surface sur laquelle lesdites couches sont maintenues par dépression.

Selon une autre caractéristique particulière, ledit découpage et ledit soudage sont réalisés à l'aide d'au moins un couteau chauffant.

Selon une autre caractéristique particulière, le procédé objet de l'invention consiste en outre à effectuer une opération supplémentaire de découpage et soudage simultanés en différents emplacements répartis sur lesdites couches, aboutissant à la réalisation de boutonnières dans lesdites couches. Ceci permet d'assurer une mise en place de couches superposées de grande surface; ceci aide également à l'isolation thermique: en effet, pour avoir une meilleure isolation thermique d'un objet protégé par un écran thermique »multicouche« selon l'invention, on peut être conduit à placer l'objet et son écran dans une enceinte et à faire le vide dans celleci, ce qui est facilité par la présence desdites boutonnières, notamment dans le cas d'un écran de grande largeur.

D'autres caractéristiques et avantages de l'écran thermique composite et de son procédé de fabrication, objets de l'invention, apparaîtront mieux à la lecture de la description qui suit de plusieurs exemples de réalisation donnés à titre indicatif et non limitatif, en référence aux dessins annexés sur lesquels:

— la figure 1 est une vue schématique d'un ensemble thermiquement isolant selon l'invention,
— la figure 2 est une vue en coupe schéamatique d'une partie d'un écran thermique »multicouche« selon l'invention,
— la figure 3 est une représentation schématique d'un dispositif pour la mise en oeuvre du procédé objet de l'invention,
— la figure 4 est une vue en coupe schématique d'un écran thermique »multicouche« selon l'invention, comportant lesdites boutonnières,
— la figure 5a est une représentation schématique d'un dispositif permettant de former lesdites surfaces élémentaires métallisées sur une couche réflectrice,
— la figure 5b est une vue schématique d'une partie de ladite couche réflectrice munie desdites surface élémentaires métallisées,
— la figure 5c est une vue schématique d'une partie d'un rouleau permettant d'obtenir lesdites surfaces élémentaires métallisées, et
— les figures 6 et 6a sont des représentations schématiques d'autres dispositifs pour la mise en oeuvre du procédé objet de l'invention.

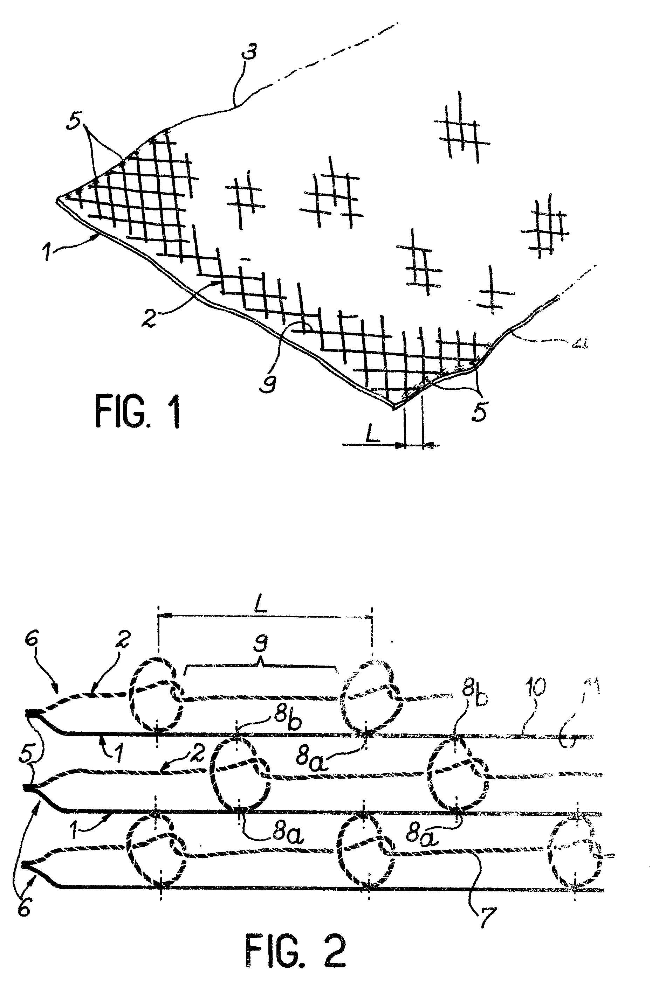

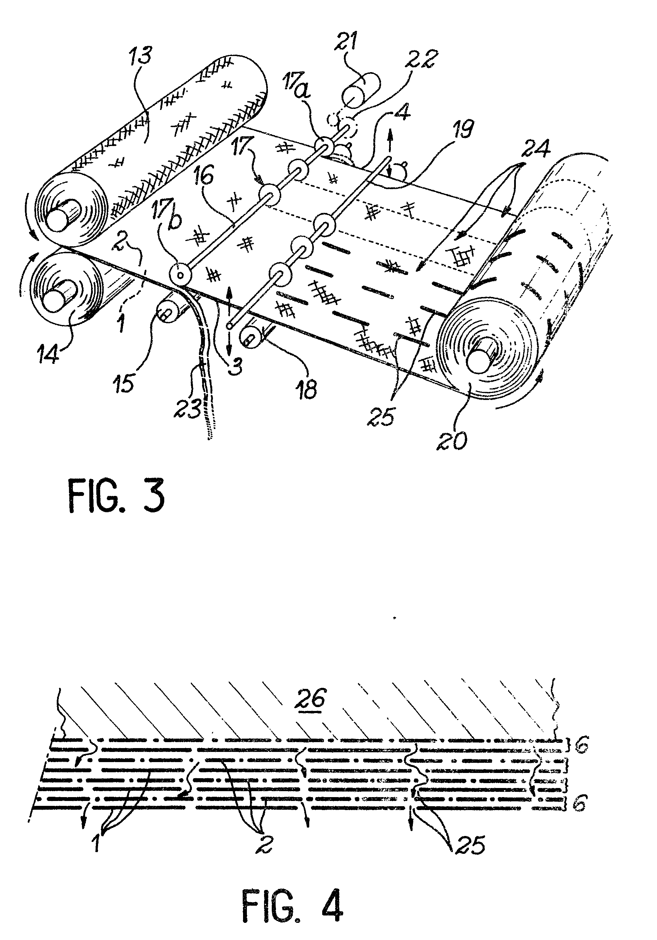

Sur la figure 1, on a représenté schématiquement un ensemble thermiquement isolant 1—2 ou écran thermique »monocouche« selon l'invention. Cet écran comporte une couche réflectrice 1 et une couche d'espacement 2. Cette dernière est en tulle réalisé à l'aide d'un fil monobrin. La couche réflectrice 1 et la couche d'espacement 2 sont faites toutes deux d'une matière comme le polyester ou le polyimide et soudées l'une à l'autre sur leurs bords 3 et 4 (ce qui arrête d'ailleurs l'effilage du tulle), selon un procédé qui sera expliqué lors de la description de la figure 3. Le pouvoir réfléchissant de la couche réflectrice 1 est obtenu par métallisation de celle-ci sur ses deux faces (références 10 et 11 de la figure 2), ce qui sera commenté plus en détail dans la description de la figure 2. On voit également sur lesdits bords 3 et 4 quelques unes des soudures 5 réalisées, présentant un contact thermique espaceur-réflecteur négligeable. Ces soudures, lors d'une variation de température, ne se rompent pas, du fait que les couches réflectrice 1 et d'espacement 2, faites d'une même matière, ont les mêmes propriétés thermiques et en particulier le même coefficient de dilatation thermique.

Une matière comme le polyester ou le polyimide est choisie pour réaliser l'écran thermique car elle permet l'utilisation de cet écran à des températures bien supérieures à la température ambiante (20°C environ). Ainsi, le polyimide permet-il de réaliser un écran »multicouche« restant encore efficace à 500°C.

Sur la figure 2, on a représente une vue en coupe schématique d'une partie d'un écran thermique »multicouche« selon l'invention. Cet lècran résulte de la superposition d'écrans thermiques »monocouches« 6 du genre de celui qui est représenté sur la figure 1 et comportant donc chacun une couche réflectrice 1 par exemple en polyester et une couche d'espacement 2 en tulle de polyester réalise à l'aide d'un fil 7 monobrin, ces deux couches étant soudées l'une à l'autre sur leurs bords (références 3 et 4 de la figure 1). Sur la figure 2, on a représenté quelques unes des soudures 5 qui en résultent. Le contact thermique entre une couche réflectrice 1 et une couche d'espacement 2 qui existe du fait desdites soudures est négligeable, étant donné que la surface de contact entre lesdites couches, à l'endroit des soudures, est pratiquement nulle.

On voit également sur la figure 2 des points de contact 8a d'une couche d'espacement 2 appartenant à l'un des écrans »monocouches« 6 avec la couche réflectrice 1 à laquelle elle est soudée et des points de contact 8b de cette couche d'espacement 2 avec la couche réflectrice 1 de l'écran »monocouche« 6 adjacent. Le tulle constituant les couches d'espacement 2 a des mailles 9 de grande longueur L (figures 1 et 2), d'où la faible masse volumique de ce tulle. Les points de contact 8a et 8b sont peu nombreux, comparativement à ceux qu'on obtiendrait avec des matières comme le feutre ou la gaze. De plus, le déploiement filamentaire entre deux points de contact 8a et 8b correspondant à deux couches réflectrice 1 successives est important.

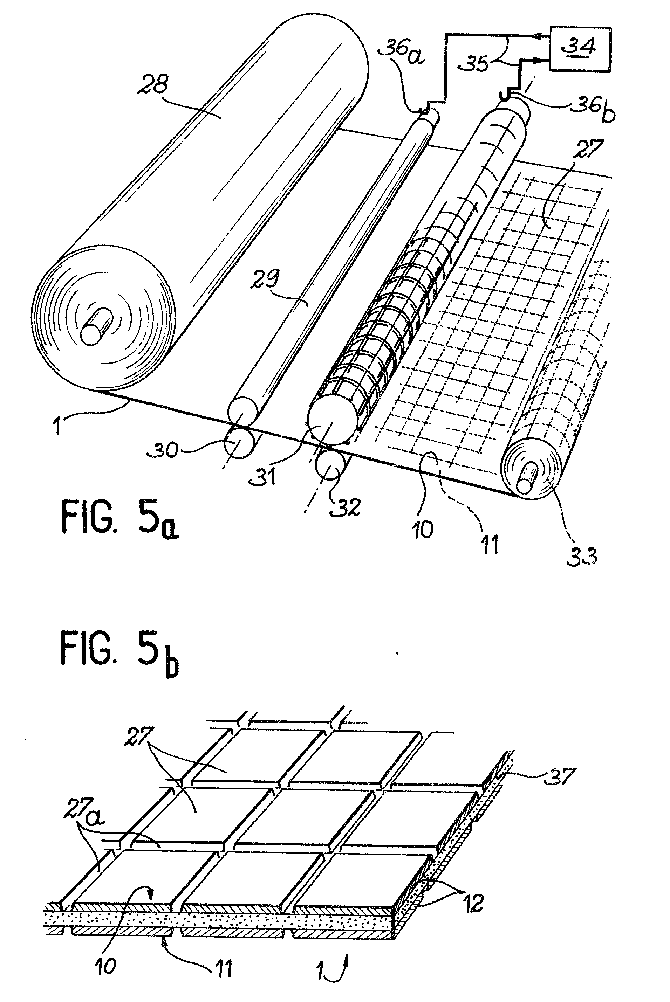

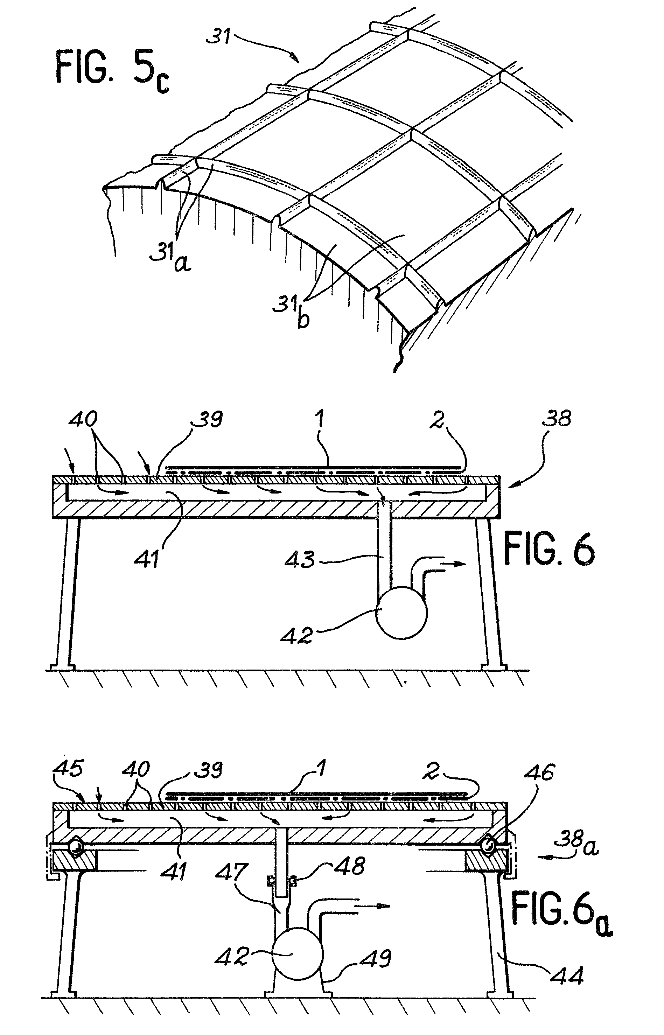

Comme on l'a déjà mentionné plus haut, chaque couche réflectrice 1 est métallisée sur ses deux faces 10 et 11: celles-ci sont par exemple recouvertes d'aluminium, métal de faible masse atomique. Notamment dans le cas d'un écran thermique destiné à isoler thermiquement un magnétomètre, prévu pour mesurer un champ magnétique, l'épaisseur totale des couches d'aluminium (référence 12 de la figure 5b) d'une couche réflectrice 1 et bien entendu le nombre de ces couches réflectrices 1, sont calculables de manière que l'écran thermique soit adapté à la longueur d'onde des rayonnements infrarouges incidents, de façon à pouvoir réfléchir ceux-ci, et comporte une masse d'aluminium suffisamment faible pour que le champ magnétique perturbateur engendré par l'agitation thermique des électrons de conduction de l'aluminium, champ qui est proportionnel à la masse de cet aluminium, soit négligeable devant le champ magnétique à mesurer, ou soit de l'ordre du bruit de fond du magnétomètre.

A titre explicatif et non limitatif, on peut utiliser les données suivantes pour un écran monocouche:

— épaisseur d'une couche réflectrice (non métallisée): 2,5 à 3,5 μm,
— épaisseur d'une couche d'aluminium: 10 à 40 μm (100 à 400 Å) (20 à 80 μm pour les deux couches),
— longueur de maille du tulle: environ 3 mm,
— épaisseur d'une couche d'espacement: environ 0,8 mm.

La masse surfacique de l'écran monocouche obtenu est ainsi de l'ordre de 13 g/m² (environ 6 g/m² de couche réflectrice et 7 g/m² de couche d'espacement), contre environ 40 g/m² pour les écrans monocouches connus dans l'état de la technique.

Sur la figure 3, on a représenté schématiquement un dispositif pour la mise en oeuvre du procédé objet de l'invention. Ce dispositif comprend essentiellement un rouleau 13 d'alimentation en tulle (de polyester par exemple), un rouleau 14 d'alimentation en film de polyester aluminisé sur ses deux faces (et correspondant à la couche réflectrice 1), un premier rouleau-support 15 associé à un premier arbre 16 placé au-dessus et porteur de couteaux chauffants circulaires 17, un second rouleau-support 18 associé à un second arbre 19 placé au-dessus et porteur de couteaux chauffants circulaires 17, et un rouleau de bobinage 20. Les couteaux chauffants circulaires 17, dont les ébauches sont disponibles dans le commerce, comportent par exemple chacun une résistance chauffante (non représentée) au voisinage de leur périphérie, alimentée en courant électrique par des balais (non représentés). Un moteur 21 permet d'entraîner le premier arbre 16 en rotation à l'aide de pignons 22. Un mécanisme à vérins (non représenté sur la figure 3), réalisable par l'homme de l'art, permet d'abaisser ou de relever le second arbre 19.

Les couches d'espacement 2 et réflectrice 1 sont déroulées respectivement à partir des rouleaux d'alimentation 13 et 14 (à une vitesse de l'ordre de 30 à 40 cm/s par exemple), se rejoignent pour passer entre les couteaux chauffants 17 du premier arbre 16 et le premier rouleau-support 15 par lequel lesdites couches sont soutenues. Deux 17a et 17b des couteaux chauffants circulaires 17 du premier arbre 16 permettent de découper les couches réflectrice 1 et d'espacement 2, créant ainsi des déchets 23, et simultanément de souder ces couches sur leurs bords 3 et 4. Les autres couteaux chauffants 17 du premier arbre 16 sont prévus pour réaliser plusieurs écrans thermiques monochouches 24, dont la largeur est fonction des écartements des couteaux chauffants 17, également par découpage et soudage simultanés. (La tension des couches réflectrice 1 et d'espacement 2 doit être suffisamment faible, après découpage et soudage, pendant le début du refroidissement des soudures réalisées, pour éviter que ces dernières ne se défassent. Néanmoins, la cassure de quelques unes des soudures, qui peut se produire lors de la manipulation des écrans monocouches, n'est pas gênante. Il en reste toujours une quantité suffisante pour permettre la fixation des couches réflectrice et d'espacement l'une à l'autre et donc la manipulation desdits écrans monocouches, les points de contact thermique ayant par ailleurs, de ce fait, encore diminué en nombre).

Les écrans monocouches 24 formés passent ensuite entre les couteaux chauffants circulaires 17 du second arbre 19 et le second rouleau-support 18 soutenant également les écrans monocouches 24 formés. Les couteaux chauffants circulaires 17 du second arbre 19 permettent de découper, si on le désire, des boutonnières 25 (toujours par découpage et soudage simultanés) dans certains des écrans monocouches 24. Après quoi, les écrans 24 formés (sous forme de ruban) sont enroulés sur le rouleau de bobinage 20.

Lesdites boutonnières 25 réalisent une fixation intermédiaire des deux couches superposées dans le cas de bandes de grande largeur; elles sont par ailleurs utiles lorsque l'on désire réaliser un écran thermique multicouche par superposition d'écrans thermiques monocouches de grande largeur (de l'ordre de quelques dizaines de centimètres par exemple). La figure 4 est une vue en coupe schématique d'un tel écran thermique multicouche prévu pour isoler thermiquement un objet 26 et formé par exemple par bobinage d'un écran thermique monocouche de grande largeur, du genre de ceux que l'on obtient sous forme de ruban à l'aide du dispositif de la figure 3, autour de l'objet 26, sur plusieurs épaisseurs correspondant à des écrans thermiques monocouches 6. A titre explicatif mais non limitatif, des boutonnières 25 de 1 cm de long sont pratiquées dans ledit ruban avec des pas longitudinal et latéral de 10 cm. Ces boutonnières 25 mettent en communication les épaisseurs successives 6 et permettent de faire le vide, »à travers« les couches réflectrices 1, dans l'écrans multicouche, ce vide permettant de supprimer la conduction thermique gazeuse ainsi que les mouvements de convection thermique gazeuse, que la taille des mailles d'espacement et la distance entre réflecteurs ne sauraient diminuer. Il va sans dire que les isolations thermiques à écrans de radiation multiples sont en principe très performants et sont déjà sous vide.

Sur la figure 5a, on a représenté schématiquement un dispositif permettant de former des surfaces élémentaires 27 métallisées et électriquement isolées les unes des autres, sur les faces 10 et 11 d'une couche réflectrice 1, par un procédé d'électro-usinage. Ce dispositif comprend essentiellement un rouleau 28 d'alimentation en film de polyester aluminisé sur ses deux faces et correspondant à la couche réflectrice 1 à traiter, un premier rouleau-électrode lisse 29 associé à un premier rouleau-support 30 placé en-dessous, un second rouleau-électrode 31 associé à un second rouleau-support 32 placé en-dessous, et un rouleau 33 de bobinage. Les deux rouleaux-électrodes 29 et 31 sont électriquement conducteurs à leur périphérie. Sur la figure 5c, on a représenté schématiquement une partie du second rouleau-électrode 31. Celui-ci est muni sur son pourtour d'un quadrillage 31a en relief, délimitant une pluralité de surfaces élémentaires carrées 31b. Une tension électrique, d'environ 40 V en continu par exemple, est établie entre les deux rouleaux-électrodes 29 et 31 (figure 5a), à l'aide d'un générateur électrique 34 alimentant par des conducteurs électriques 35 des balais 36a et 36b frottant respectivement sur la périphérie du premier rouleau-électrode 29 et sur celle du second 31.

La couche réflectrice 1 est déroulée, sa face 10 étant par exemple tournée vers le haut, à partir du rouleau d'alimentation 28 et passe entre le premier rouleau-électrode 29 et le premier rouleau-support 30 puis entre le second rouleau-électrode 31 et le second rouleau-support 32, après quoi elle est enroulée sur le rouleau 33 de bobinage. Un courant électrique circule du premier rouleau-électrode 29 au second 31 en passant par le métal, l'aluminium par exemple, qui recouvre la face 10 de la couche réflectrice 1, cette face 10 étant celle qui est en regard des deux rouleaux-électrodes 29 et 31. En passant sous le second rouleau-électrode 31, la face 10 de la couche réflectrice 1 voit son aluminium éliminé aux endroits correspondant au quadrillage 31a de la figure 5c.

Lorsque la face 10 a été traitée, on peut alors traiter l'autre face 11 de la couche réflectrice 1, après quoi cette couche réflectrice 1 peut être assemblée à une couche d'espacement comme on l'a expliqué à propos de la figure 3.

Sur la figure 5b, on a représenté schématiquement une partie de la couche réflectrice 1 traitée par électro-usinage. Cette couche réflectrice 1 comporte un film 37 de polyester par exemple, sur chaque face 10 et 11 duquel a été disposée une couche 12 d'aluminium. Par électro-usinage des faces 10 et 12, l'aluminium est éliminé en partie, faisant apparaître là où il est éliminé, un quadrillage en creux de couloirs 27a perpendiculaires les uns aux autres, délimitant des surfaces élémentaires carrées 27 correspondant à l'aluminium qui subsiste, surfaces qui sont donc électriquement isolées les unes des autres par lesdits couloirs 27a. Le quadrillage en relief 31a (figure 5c) est prévu pour que la surface aluminisée reste très supérieure à celle qui ne l'est plus après l'électro-usinage. A titre d'exemple, le côté des surfaces élémentaires carrées 27 peut être de l'ordre de 5 mm et la largeur de couloirs 27a, de l'ordre de 0,3 mm. Comme on l'a déjà indiqué, le fractionnement des faces 10 et 11 métallisées, en surfaces métallisées élémentaires 27 électriquement isolées les unes des autres, permet de réduire les vibrations et les dissipations thermiques par courants de Foucault se produisant dans les couches métalliques 12 des faces 10 et 11 (figure 5b) lorsque la couche réflectrice 1 est soumise à un champ magnétique variable dans le temps et perpendiculaire à son plan, l'importance de ces vibrations ou de ces dissipations thermiques (par effet Joule) étant liée à la fréquence du champ et à l'impédance électrique des boules d'induction.

Sur la figure 6, on a représenté schématiquement un autre dispositif pour la mise en oeuvre du procédé objet de l'invention. Ce dispositif comprend essentiellement une table 38 présentant une surface plane 39 percée de trous 40 communiquant avec une cavité 41 à laquelle est reliée une pompe à vide 42 à palettes par l'intermédiaire d'une canalisation 43. Sur la surface plane 39, on peut disposer une couche d'espacement 2 et, par dessus, une couche réflectrice 1. Lorsque la pompe fonctionne, l'air est aspiré par les trous 40 et la couche réflectrice 1 est plaquée contre la surface plane 39. La couche d'espacement 2 l'est donc également. On peut alors, par exemple à l'aide d'un couteau chauffant non représenté, ou encore à l'aide d'un laser de puissance à $CO_2$, découper et souder simultanément les deux couches 1 et 2 pour réaliser des écrans thermiques monocouches de formes diverses, permettant par exemple d'isoler thermiquement des objets dont la surface externe n'est pas développable. Le couteau chauffant peut être déplacé à la main ou à l'aide de moyens mécaniques réalisables par l'homme de l'art. La table peut être rendue mobile, par exemple tournante, pour éviter des déplacements à la personne qui découpe les écrans. C'est le cas de la table 38a représentée schématiquement sur la figure 6a. Cette table 38a comprend un bâti 44 sur lequel peut tourner un plateau 45 à l'aide de roulements 46 par exemple à billes. Comme précédemment, ce plateau 45 présente une surface plane 39 percée de trous 40 communiquant avec une cavité 41 présente dans le plateau 45 et reliée, par l'intermédiaire d'une canalisation 47 à passage tournant 48, à une pompe 42 à palettes, reposant sur un support 49. On peut également découper et souder simultanément des couches réflectrice et d'espacement sur une table (par exemple du genre table à dessin) revêtue d'une plaque réfractaire non adhérente, en les y immobilisant à l'aide de règles également réfractaires et non adhérentes que l'on utilise également comme guides pour le découpage et le soudage.

La présente invention propose donc non seulement des écrans thermiques composites présentant une conductivité thermique bien inférieure à celle des écrans thermiques composites connus, mais encore un procédé de réalisation desdits écrans, permettant de résoudre le difficile problème de la manipulation du tulle qui compose les couches d'espacement desdits écrans thermiques. Ces derniers peuvent résister sans aucun dommage à des vibrations correspondant à des fréquences de 0 à 2000 Hz et à des accélérations d'au moins 23 g (g étant voisin de 9,8 m/s$^2$), appliquées dans les trois axes de l'espace pendant au moins 17 s, ou reprendre intégralement leur place après avoir été soumis accidentellement à une accélération de 150 g.

**Revendications**

1. Ecran thermique comprenant au moins un ensemble thermiquement isolant (1—2) formé d'une couches réflectrice (1) et d'une couche d'espacement (2), caractérisé en ce que ladite couche d'espacement (2) est en tulle.

2. Ecran thermique selon la revendication 1, caractérisé en ce que ledit tulle est réalisé à l'aide d'un fil (7) monobrin.

3. Ecran thermique selon l'une quelconque des revendications 1 et 2, caractérisé en ce que l'espace défini par la (ou chaque) couche d'espacement (2) est sous vide.

4. Ecran thermique selon l'une quelconque des revendications 1 à 3, caractérisé en ce que ladite couche réflectrice (1) est faite à partir d'une matière prise dans le groupe comprenant les polyesters et les polyimides.

5. Ecran thermique selon la revendication 4, caractérisé en ce que ladite couche d'espacement (2) est faite de la même matière que la matière de ladite couche réflectrice (1).

6. Ecran thermique selon l'une quelconque des revendications 1 à 5, caractérisé en ce que ladite couche réflectrice (1) comprend au moins une face (10) métallisée.

7. Ecran thermique selon l'une quelconque des revendications 1 à 5, caractérisé en ce que ladite couche réflectrice (1) comprend au moins une face (10) formée d'un ensemble de surfaces élémentaires (27) métallisées et électriquement isolées les unes des autres.

8. Ecran thermique selon la revendication 7, caractérisé en ce que l'ensemble desdites surfaces élémentaires (27) est réalisé par électro-usinage.

9. Ecran thermique selon l'une quelconque des revendications 1 à 8, caractérisé en ce qu'il se présente sous la forme d'un ruban (24).

10. Procédé de fabrication de l'écran thermique selon l'une quelconque des revendications 1 à 9, caractérisé en ce que, pour rendre solidaires l'une de l'autre ladite couche réflectrice (1) et ladite couche d'espacement (2), il consiste à effectuer simultanément:

— un découpage de ladite couche réflectrice (1) et de ladite couche d'espacement (2), de façon à former des bords (3, 4) pour lesdites couches (1, 2), et
— un soudage de ces couches (1, 2) l'une à l'autre sur lesdite bords (3, 4),

ce découpage et ce soudage étant effectués à chaud.

11. Procédé selon la revendication 10, caractérisé en ce que ledit découpage et ledit soudage sont effectuées sur une surface (39) sur laquelle lesdites couches (1, 2) sont maintenues par dépression.

12. Procédé selon l'une quelconque des revendications 10 et 11, caractérisé en ce que ledit découpage et ledit soudage sont réalisés à l'aide d'au moins un conteau chauffant (17).

13. Procédé selon l'une quelconque des revendications 10 à 12, caractérisé en ce qu'il consiste en outre à effectuer une opération supplémentaire de découpage et soudage simultanés en différents emplacements répartis sur lesdites couches, aboutissant à la réalisation de boutonnières (25) dans lesdites couches (1, 2).

14. Application de l'écran thermique selon la revendication 9, a l'isolation thermique d'un objet (26), ledit ruban (24) étant bobiné autour dudit objet (26) sur plusieurs épaisseurs.

**Patentansprüche**

1. Wärmeschutz in Form wenigstens eines thermisch isolierenden Verbundgebildes (1—2) aus einer Reflektorschicht (1) und einer Füllschicht (2), dadurch gekennzeichnet, daß die Füllschicht (2) aus einem Gewirk ist.

2. Wärmeschutz nach Anspruch 1, dadurch gekennzeichnet, daß das Gewirk aus einer Elementarfaser (7) gefertigt ist.

3. Wärmeschutz nach einem der Ansprüche 1 und 2, dadurch gekennzeichnet, daß der durch die oder jede Füllschicht (2) definierte Raum evakuiert ist.

4. Wärmeschutz nach einem der Ansprüche 1 bis 3, dadurch gekennzeicht, daß die Reflektorschicht (1) aus einem aus der Gruppe der Polyester und Polyimide gewählten Material gefertigt ist.

5. Wärmeschutz nach Anspruch 4, dadurch gekennzeichnet, daß die Füllschicht (2) aus dem gleichen Material gefertigt ist wie die Reflektorschicht (1).

6. Wärmeschutz nach einem der Ansprüche 1 bis 5, dadurch gekennzeichnet, daß die Reflektorschicht (1) wenigstens eine metallisierte Oberfläche (10) hat.

7. Wärmeschutz nach einem der Ansprüche 1 bis 5, dadurch gekennzeichnet, daß die Reflektorschicht (1) wenigstens eine Oberfläche (10) aufweist, welche aus einer Anordnung von elektrisch voneinander isolierten, metallisierten Elementarflächen (27) gebildet ist.

8. Wärmeschutz nach Anspruch 7, dadurch gekennzeichnet, daß die Anordnung von Elementarflächen (27) durch Funkenerosion gebildet ist.

9. Wärmeschutz nach einem der Ansprüche 1 bis 8, dadurch gekennzeichnet, daß er in Form einer Gutbahn (24) vorliegt.

10 Verfahren zum Herstellen des Wärmeschutzes nach einem der Ansprüche 1 bis 9, dadurch gekennzeichnet, daß es darin besteht, die Reflektorschicht (1) und die Füllschicht (2) fest miteinander zu verbinden, indem man

— die Reflektorschicht (1) und die Füllschicht (2) beschneidet, so daß an den Schichten (1, 2) Ränder (3, 4) gebildet werden, und gleichzeitig

— die Schichten (1, 2) entlang ihren Rändern (3, 4) miteinander verschweißt,

wobei das Beschneiden und das Schweißen unter Wärmeeinwirkung durchgeführt werden.

11. Verfahren nach Anspruch 10, dadurch gekennzeichnet, daß das Beschneiden und das Schweißen auf einer Oberfläche (39) erfolgen, auf welcher die Schichten (1, 2) durch Unterdruck festgehalten sind.

12. Verfahren nach einem der Ansprüche 10 und 11, dadurch gekennzeichnet, daß das Beschneiden und das Schweißen mit Hilfe wenigsten einer beheizbaren Klinge (17) erfolgen.

13. Verfahren nach einem der Ansprüche 10 bis 12, dadurch gekennzeichnet, daß es außerdem darin besteht, die Schichten an verschiedenen darüber verteilten Stellen zu schneiden und gleichzeitig zu schweißen, um in den Schichten (1, 2) Schlitze (25) auszubilden.

14. Verwendung des Wärmeschutzes nach Anspruch 9 für die Wärmeisolierung eines Gegenstands (26), bei welcher die Gutbahn (24) in mehreren Lagen um den Gegenstand (26) gewickelt wird.

## Claims

1. Thermal screen comprising at least one thermally-insulating assembly (1—2) formed from a reflective layer (1) and a spacer layer (2), characterized in that said spacer layer (2) is a mesh.

2. Thermal screen according to Claim 1, characterized in that said mesh is formed from a monofilamentary material.

3. Thermal screen according to either of Claims 1 and 2, characterized in that the space defined by the (or each) spacer layer (2) is under vacuum.

4. Thermal screen according to any one of Claims 1 to 3, characterized in that said reflective layer (1) is formed from a material selected from the group comprising polyesters and polyimides.

5. Thermal screen according to Claim 4, characterized in that the spacer layer (2) is made from the same material as the material of the reflective layer (1).

6. Thermal screen according to any one of Claims 1 to 5, characterized in that the reflective layer (1) comprises at least one metallised surface (10).

7. Thermal screen according to any one of Claims 1 to 5, characterized in that the reflective layer (1) comprises at least one surface (10) formed from an assembly of metallised surface elements (27) electrically insulated from one another.

8. Thermal screen according to Claim 7, characterized in that the assembly of said surface elements (27) is produced by electro-etching.

9. Thermal screen according to any one of Claims 1 to 8, characterized in that it is produced in the form of a ribbon (24).

10. Process for the production of a thermal screen according to any one of Claims 1 to 9, characterized in that, for fixing the reflective layer (1) and the spacer layer (2) to one another, it consists in simultaneously:

— cutting said reflective layer (1) and said spacer layer (2), whereby to from edges (3, 4) for said layers (1, 2), and

— welding said layers (1, 2) together at said edges (3, 4)

said cutting and welding being carried out by heat.

11. Process according to Claim 10, characterized in that said cutting and welding are effected over a surface (39) on which said layers (1, 2) are held by pressure.

12. Process according to either of Claims 10 and 11, characterized in that said cutting and welding are produced by means of a hot blade (17).

13. Process according to any one of Claims 10 to 12, characterized in that it additionally comprises conducting a supplementary operation of simultaneous cutting and welding at different locations distributed over said layers, leading to the formation of slits (25) in said layers (1, 2).

14. Application of a thermal screen according to Claim 9 to thermal insulation of an objet (26), said ribbon (24) being wound in several thicknesses around said object (26).

FIG. 1

FIG. 2

FIG. 3

FIG. 4

FIG. 5a

FIG. 5b

FIG. 5$_c$

31
31$_a$
31$_b$

40  39  1  2  38

FIG. 6

41
43
42

45  40  39  1  2  46

38$_a$

41  47  48

42  49

44

FIG. 6$_a$